# EUROPEAN PATENT APPLICATION

(11) **EP 4 782 252 A1**
(43) Date of publication of application: **29.07.2026**
(21) Application number: 24867976.3
(22) Date of filing: 16.08.2024
(51) Int. Cl.: B60L 53/14

(54) **CHARGING INLET**

(30) Priority: 21.09.2023 JP 2023154103
(71) Applicant: Yazaki Corporation, Tokyo 108-0075 (JP)
(72) Inventor: NAGANISHI, Yukinari, Susono-shi, Shizuoka 410-1194 (JP)
(74) Representative: Grünecker Patent- und Rechtsanwälte PartG mbB
(86) International application number: PCT/JP2024/029131
(87) International publication number: WO 2025/062895

(57) **Abstract**

A charging inlet (1) includes: an inlet body (2) disposed in a vehicle (200) and having an insertion port (21) into which a connector (310) for charging is inserted; a flexible annular cover (3) that covers the inlet body (2) in such a manner as to surround the inlet body (2), the flexible annular cover (3) having an opening (31) through which a connector (310) can pass; a drive mechanism (4) that rotates a cover (3) to move the position of the opening (31); and a control unit (50) that controls the drive mechanism (4).

## Description

### Field

The present invention relates to a charging inlet.

### Background

In the related art, there is a charging inlet disposed in a vehicle. Patent Literature 1 discloses a vehicle charging system including a power feeding device having a power feeding fitting body and provided in a parking space for a vehicle, and a power receiving fitting body provided at a bottom portion of a vehicle and capable of inserting and removing the power feeding fitting body in insertion and removal directions. The power receiving fitting body is an inlet, is provided at the bottom portion of the vehicle, and the power feeding fitting body can be fitted into and removed from the power receiving fitting body.

### Citation List

### Patent Literature

Patent Literature 1: JP 2022 - 172 489 A

### Summary

### Technical Problem

A charging inlet has an insertion port into which a connector for charging is inserted. It is desired that the insertion port of a power receiving inlet can be appropriately protected from mud and foreign matters.

The object of the present invention is to provide a charging inlet capable of protecting an insertion port into which a connector for charging is inserted.

### Solution to Problem

A charging inlet according to the present invention includes an inlet body disposed in a vehicle and having an insertion port into which a connector for charging is inserted; a flexible annular cover that covers the inlet body in such a manner as to surround the inlet body, the flexible annular cover having an opening through which the connector can pass; a drive mechanism that rotates the cover to move a position of the opening; and a control unit that controls the drive mechanism. Advantageous Effects of Invention

A charging inlet according to the present invention includes: an inlet body having an insertion port into which a connector for charging is inserted; a flexible annular cover that covers the inlet body in such a manner as to surround the inlet body, the flexible annular cover having an opening through which the connector can pass; a drive mechanism that rotates the cover to move a position of the opening; and a control unit that controls the drive mechanism. According to the charging inlet of the present invention, the insertion port into which the connector for charging is inserted can be protected by the cover.

### Brief Description of Drawings

FIG. 1 is a perspective view of a charging inlet according to an embodiment.
FIG. 2 is a side view of the charging inlet of the embodiment.
FIG. 3 is an exploded perspective view of the charging inlet of the embodiment.
FIG. 4 is a perspective view of an inlet body of the embodiment.
FIG. 5 is a front view of the charging inlet of the embodiment.
FIG. 6 is a cross-sectional perspective view of the charging inlet of the embodiment.
FIG. 7 is a perspective view of the charging inlet of the embodiment.
FIG. 8 is a cross-sectional perspective view of the charging inlet of the embodiment.

### Description of Embodiments

Hereinafter, a charging inlet according to an embodiment of the present invention will be described in detail with reference to the drawings. Note that the invention is not limited by the embodiment. Moreover, components in the following embodiment include those that can be easily conceived of by those skilled in the art and those that are substantially the same.

### [Embodiments]

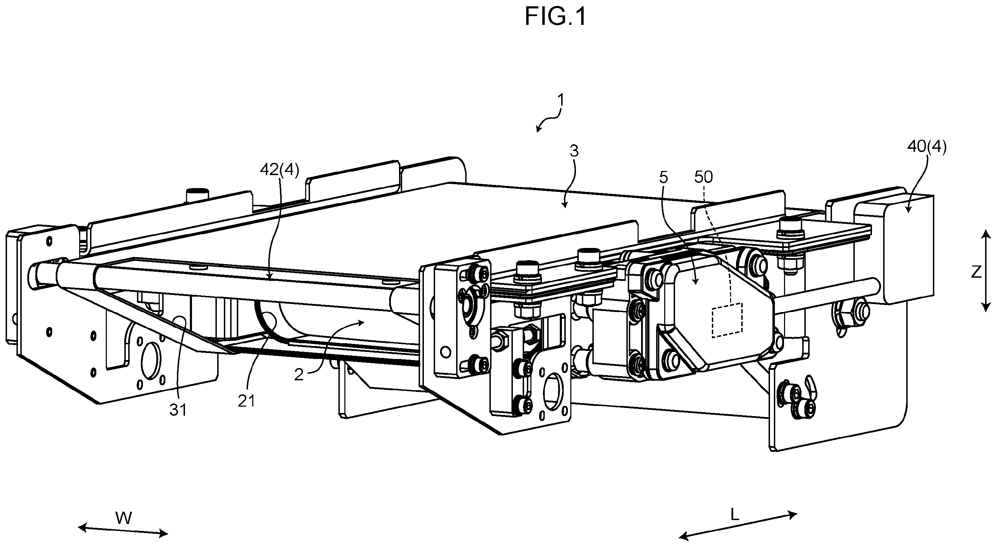

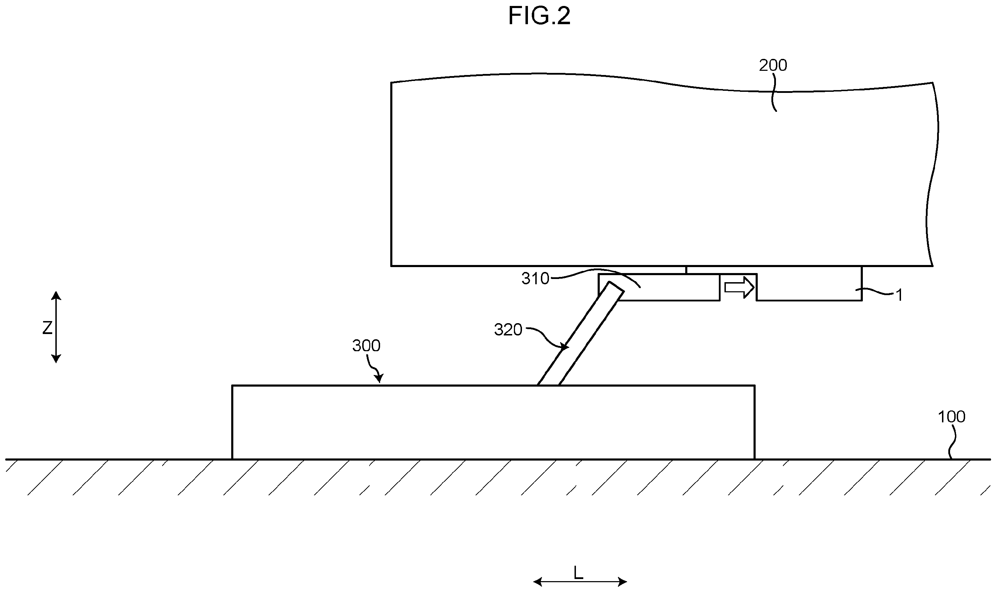

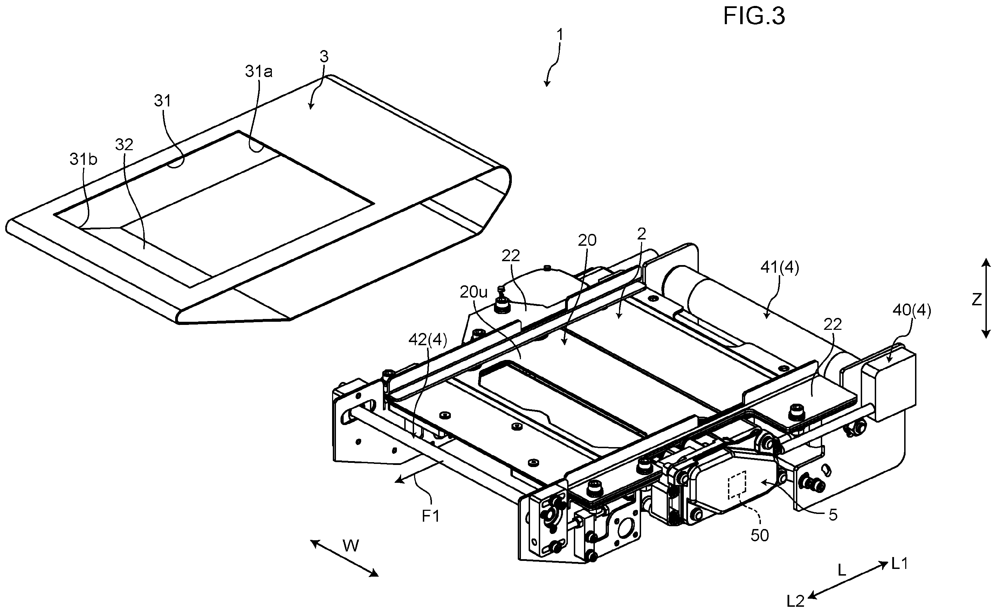

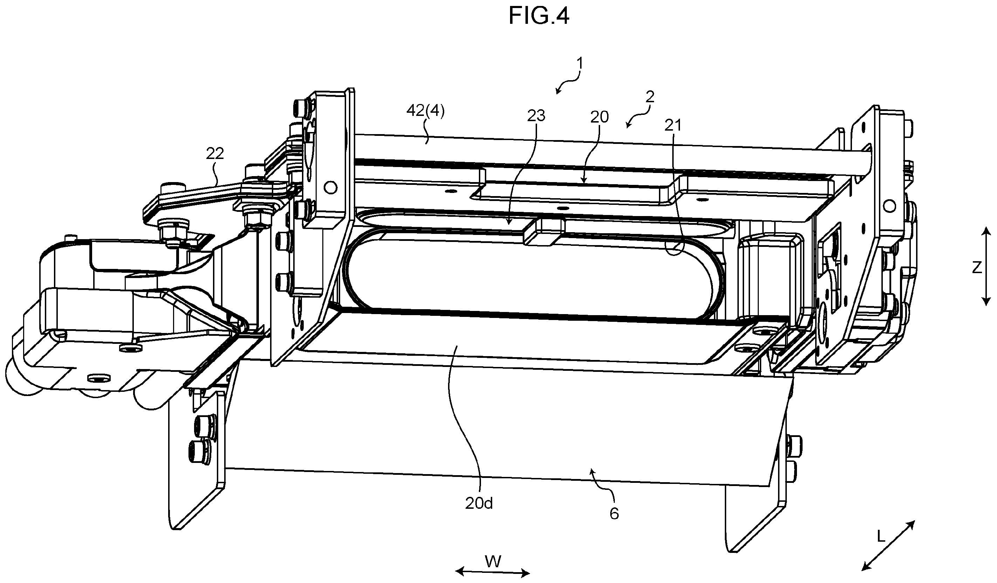

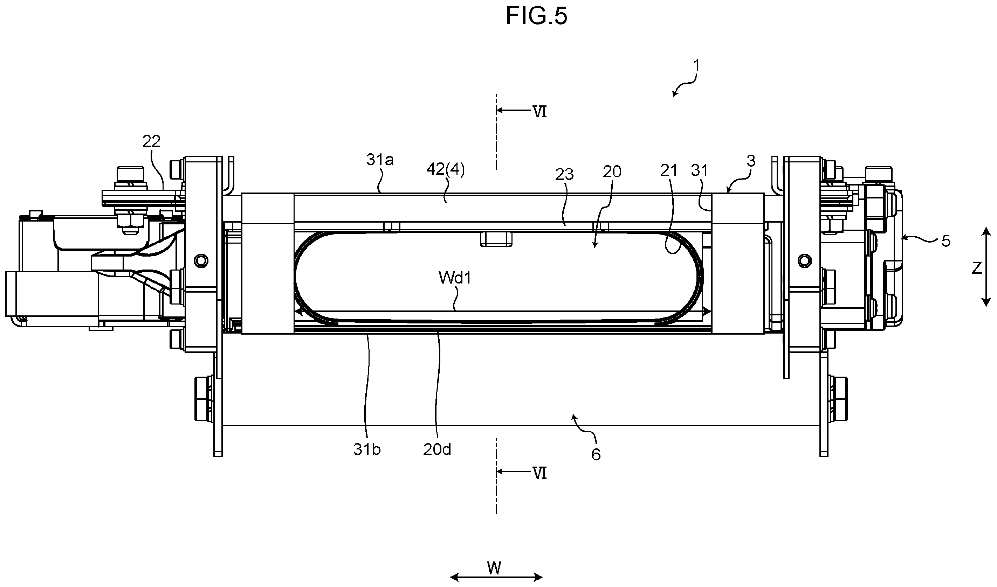

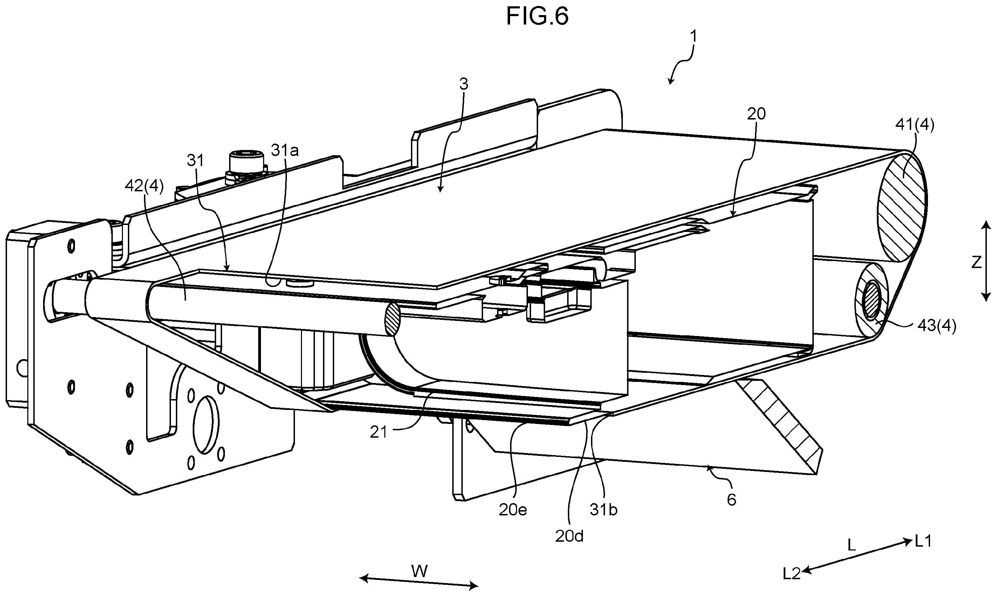

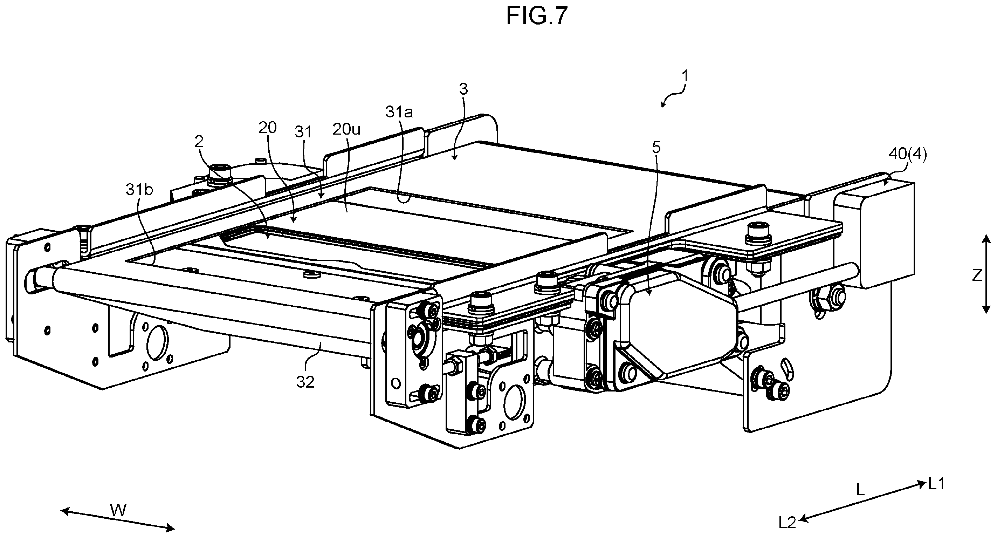

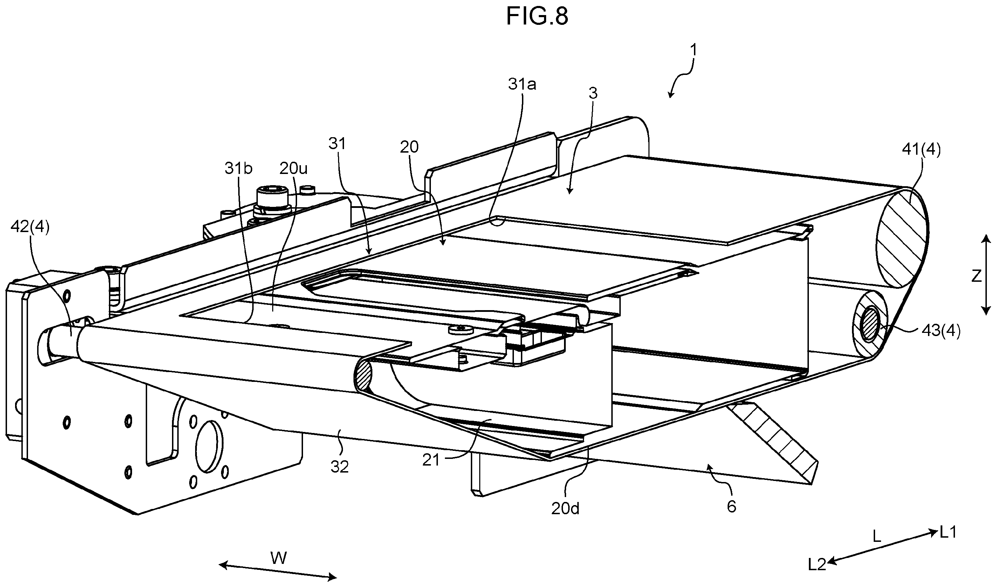

An embodiment will be described with reference to FIGS. 1 to 8. The present embodiment relates to a charging inlet. FIG. 1 is a perspective view of a charging inlet of the embodiment, FIG. 2 is a side view of the charging inlet of the embodiment, FIG. 3 is an exploded perspective view of the charging inlet of the embodiment, FIG. 4 is a perspective view of an inlet body of the embodiment, FIG. 5 is a front view of the charging inlet of the embodiment, FIG. 6 is a cross-sectional perspective view of the charging inlet of the embodiment, FIG. 7 is a perspective view of the charging inlet of the embodiment, and FIG. 8 is a cross-sectional perspective view of the charging inlet of the embodiment. Illustrated in FIG. 6 is a cross section taken along line VI-VI in FIG. 5.

In FIG. 1, a charging inlet 1 according to the present embodiment is illustrated. The charging inlet 1 is a fitting device for charging that is disposed in a vehicle 200. As illustrated in FIG. 2, the charging inlet 1 of the present embodiment is disposed in a lower portion of the vehicle 200 and faces a road surface. As illustrated in FIG. 2, a connector 310 is inserted into the charging inlet 1. The connector 310 is a connector for charging included in a vehicle charging device 300 disposed on a floor 100. The vehicle charging device 300 includes a moving mechanism 320 that supports the connector 310. The vehicle charging device 300 moves the connector 310 by the moving mechanism 320 and inserts the connector 310 into the charging inlet 1.

In the following description, the insertion direction of the connector 310 with respect to the charging inlet 1 is referred to as a "first direction L". The first direction L is, for example, the front-rear direction of the vehicle 200. A direction orthogonal to each of the first direction L and an up-down direction Z is referred to as a "second direction W". The second direction W is, for example, the width direction of the vehicle 200.

As illustrated in FIGS. 1 and 3, the charging inlet 1 includes an inlet body 2, a cover 3, a drive mechanism 4, and a control unit 50. As illustrated in FIG. 3, the inlet body 2 has a tubular fitting portion 20 to be fitted with the connector 310. The fitting portion 20 has a rectangular tubular shape extending in the first direction L. The fitting portion 20 is formed of, for example, metal. As illustrated in FIG. 1, the fitting portion 20 has an insertion port 21 into which the connector 310 is inserted. The insertion port 21 is opened in the first direction L. The shape of the insertion port 21 of the present embodiment is a substantially oval shape having a long axis in the second direction W.

A terminal for charging and a terminal for communication are accommodated in the fitting portion 20. These terminals are connected with a terminals of the connector 310. With the connector 310 fitted to the fitting portion 20, the vehicle charging device 300 and a battery of the vehicle 200 are connected in a chargeable manner.

As illustrated in FIG. 3, the fitting portion 20 has a top surface 20u facing upward. The fitting portion 20 is fixed to the vehicle 200 such that the top surface 20u faces a lower surface of the vehicle 200. A gap for the cover 3 is provided between the top surface 20u and the vehicle 200. The inlet body 2 has fixing portions 22 which are fixed to the vehicle 200. The fixing portions 22 are arranged at both ends of the fitting portion 20 in the second direction W.

As illustrated in FIG. 4, the inlet body 2 includes a lid member 23 capable of closing the insertion port 21. In FIG. 4, the lid member 23 in an open state for leaving the insertion port 21 open is illustrated. The lid member 23 in the open state is located above the insertion port 21. The lid member 23 has a rotating shaft extending in the second direction W. As illustrated in FIG. 3, the inlet body 2 includes an actuator 5 that rotates the lid member 23. The actuator 5 includes, for example, a motor connected to a rotation shaft of the lid member 23. The actuator 5 may include a reduction gear or the like. The actuator 5 is controlled by the control unit 50. The control unit 50 opens and closes the lid member 23 in response to a command from the vehicle 200.

As illustrated in FIG. 4, the fitting portion 20 has a lower surface 20d facing downward. The fitting portion 20 is fixed to the vehicle 200 such that the lower surface 20d faces a road surface or a floor surface. The lower surface 20d is located below the insertion port 21. The insertion port 21 is located between the top surface 20u and the lower surface 20d in the up-down direction Z. The lower surface 20d is a flat surface on which the cover 3 can slide, and extends in the first direction L.

The charging inlet 1 includes a scraper 6 that scrapes off dirt adhering to the cover 3. The scraper 6 is disposed below the lower surface 20d and faces the lower surface 20d in the up-down direction Z. A gap through which the cover 3 can pass is provided between the lower surface 20d and the scraper 6. The scraper 6 comes into contact with the cover 3 that is passing between the scraper 6 and the lower surface 20d to remove mud or foreign matters of the cover 3.

As illustrated in FIG. 3, the cover 3 is an endless member formed in an annular shape. The cover 3 has flexibility and is deformable along the shape of the inlet body 2. The cover 3 is resistant against impact and abrasion, and can protect the inlet body 2. The cover 3 may have waterproof properties and antifouling properties. The cover 3 may be water-repellent. The cover 3 may be a belt made of rubber or resin, a cloth product formed by weaving fibers, or other products.

The cover 3 has an opening 31. The opening 31 penetrates the cover 3 and communicates the external space of the cover 3 with the internal space surrounded by the cover 3. The shape of the opening 31 of the present embodiment is rectangular. The shape and the size of the opening 31 are set such that the connector 310 of the vehicle charging device 300 can pass through the opening 31.

The opening 31 has a first end 31a and a second end 31b. The first end 31a and the second end 31b are ends of the opening 31 in the circumferential direction in which the cover 3 wraps. The first end 31a and the second end 31b are opposite sides of the rectangular opening 31, and face each other in the first direction L. The cover 3 has a shielding portion 32. The shielding portion 32 is a portion that covers the insertion port 21 of the inlet body 2. The illustrated shielding portion 32 is a portion in the vicinity of the opening 31 and not having the opening 31. The shielding portion 32 of the present embodiment is adjacent to the second end 31b in the circumferential direction of the cover 3.

The drive mechanism 4 is disposed in the inlet body 2. As illustrated in FIGS. 3 and 6, the drive mechanism 4 includes an actuator 40, a first pulley 41, a second pulley 42, and a third pulley 43. The actuator 40 is a power source that rotates the cover 3, and is, for example, a motor. The first pulley 41, the second pulley 42, and the third pulley 43 rotatably support the cover 3. The axial directions of the first pulley 41, the second pulley 42, and the third pulley 43 are the second direction W.

The first pulley 41, the second pulley 42, and the third pulley 43 are arranged with the fitting portion 20 interposed. More specifically, the first pulley 41 and the third pulley 43 are arranged on a first side L1 in the first direction L with respect to the fitting portion 20. The second pulley 42 is disposed on a second side L2 in the first direction L with respect to the fitting portion 20. The first pulley 41 and the second pulley 42 face each other in the first direction L with the top surface 20u therebetween. The insertion port 21 is disposed at an end of the fitting portion 20 on the second side L2.

The first pulley 41 is a driving pulley connected with the actuator 40. The second pulley 42 is a driven pulley and is a tension pulley that applies tension to the cover 3. A biasing force F1 in the first direction L in a direction away from the first pulley 41 is applied to the second pulley 42 by a spring. The third pulley 43 is a driven pulley and is a guide pulley that guides the cover 3 to the lower surface 20d of the fitting portion 20. As illustrated in FIG. 6, the third pulley 43 is disposed under the first pulley 41. The third pulley 43 makes the cover 3 extend along the lower surface 20d of the fitting portion.

The actuator 40 is controlled by the control unit 50. The control unit 50 moves the cover 3 to the opening position and the shielding position by the drive mechanism 4. Note that the position of the cover 3 is a rotational position of the cover 3 when the cover 3 rotates while being supported by the pulleys 41,42, and 43. The position of the cover 3 can be specified by the position of the opening 31 in the circumferential direction.

In FIGS. 1, 5 and 6, the cover 3 in the opening position is illustrated. In the cover 3 in the opening position, the opening 31 faces the insertion port 21 of the fitting portion 20. The opening 31 faces the insertion port 21 in the first direction L and opens an insertion path of the connector 310 with respect to the insertion port 21. As illustrated in FIG. 5, an opening width Wd1 of the opening 31 in the second direction W is larger than the width of the connector 310 and larger than the width of the insertion port 21. Therefore, the opening 31 of the cover 3 can expose the entire insertion port 21 to the external space. The connector 310 is inserted into the insertion port 21 through the opening 31 while moving in the first direction L.

As illustrated in FIGS. 5 and 6, when the cover 3 is in the opening position, the first end 31a of the opening 31 is located above the insertion port 21, and the second end 31b is located below the insertion port 21. That is, the opening 31 exposes a portion from the top surface 20u to the lower surface 20d of the fitting portion 20 to the external space. As illustrated in FIG. 6, the first end 31a of the opening 31 is retracted to the first side L1 with respect to the second pulley 42. Therefore, the first end 31a and the connector 310 hardly interfere with each other when the connector 310 is inserted into the insertion port 21. The second end 31b is retracted to the first side L1 with respect to an end 20e of the lower surface 20d. Therefore, the second end 31b and the connector 310 hardly interfere with each other when the connector 310 is inserted into the insertion port 21.

The drive mechanism 4 includes a detection means for detecting the position of the cover 3. The detection means detects, for example, the first end 31a or the second end 31b of the opening 31. However, the position of the detection target in the cover 3 is not limited to the first end 31a or the second end 31b. The means for detecting the rotational position of the cover 3 is, for example, an optical sensor or a switch. The drive mechanism 4 controls the operation of the actuator 40 on the basis of the detection result of the detection means.

The control unit 50 moves the cover 3 to the opening position when the vehicle charging device 300 performs charging by fitting the connector 310 into the charging inlet 1. At the time of charging, the control unit 50 further causes the actuator 5 to open the lid member 23. As a result, the insertion port 21 is opened, and the connector 310 can be inserted into the fitting portion 20.

When charging is completed and the connector 310 is detached from the fitting portion 20, the control unit 50 moves the cover 3 to the shielding position and closes the lid member 23. In FIGS. 7 and 8, the cover 3 in the shielding position is illustrated. When the cover 3 is at the shielding position, the shielding portion 32 faces the insertion port 21 of the inlet body 2 as illustrated in FIG. 8. The shielding portion 32 faces the insertion port 21 in the first direction L and covers the insertion port 21 from the external space. The insertion port 21 is further closed by the lid member 23. That is, the insertion port 21 is protected by the double structure of the lid member 23 and the cover 3.

As illustrated in FIG. 7, when the cover 3 is at the shielding position, the opening 31 faces the top surface 20u of the fitting portion 20. That is, the opening 31 is accommodated in a gap between the top surface 20u and the vehicle body of the vehicle 200.

As illustrated in FIG. 8, when the cover 3 is at the shielding position, the shielding portion 32 is inclined in such a manner as to face obliquely downward. The shielding portion 32 extends from the second pulley 42 to the lower surface 20d of the fitting portion 20 in a direction inclined with respect to the first direction L. As illustrated in FIG. 6, in the charging inlet 1 of the present embodiment, the second pulley 42 is located on the second side L2 with respect to the end 20e of the lower surface 20d. Therefore, the cover 3 is inclined toward the first side L1 as it approaches the end 20e from the second pulley 42. Since the shielding portion 32 is inclined in such a manner as to face downward, mud or foreign matter adhering to the shielding portion 32 is easily peeled off from the cover 3. The mud or the foreign matter remaining adhering to the shielding portion 32 is scraped off by the scraper 6 when the cover 3 moves to the opening position.

In the charging inlet 1 of the present embodiment, when the cover 3 is at the shielding position, the lower surface 20d of the fitting portion 20 is covered by the cover 3. Therefore, mud and foreign matter hardly adhere to the lower surface 20d. The cover 3 can also cover the lower surface 20d and protect the fitting portion 20.

As described above, the charging inlet 1 of the present embodiment includes the inlet body 2, the flexible annular cover 3, the drive mechanism 4, and the control unit 50. The inlet body 2 is disposed in the vehicle 200 and has the insertion port 21 into which the connector 310 for charging is inserted. The cover 3 covers the inlet body 2 in such a manner as to surround the inlet body 2, and has the opening 31 through which the connector 310 can pass. The drive mechanism 4 rotates the cover 3 to move the position of the opening 31. The control unit 50 controls the drive mechanism 4. According to the charging inlet 1 of the present embodiment, the insertion port 21 can be protected by covering the insertion port 21 with the cover 3.

The control unit 50 of the present embodiment moves the cover 3 to the opening position and the shielding position by the drive mechanism 4. The opening position is a position where the opening 31 faces the insertion port 21 to allow insertion of the connector 310 into the insertion port 21. The shielding position is a position where the insertion port 21 is covered by the shielding portion 32 of the cover 3. The shielding portion 32 is a portion of the cover 3 not having the opening 31. In the charging inlet 1 of the present embodiment, the insertion port 21 can be protected by positioning the cover 3 at the shielding position.

The charging inlet 1 of the present embodiment includes the lid member 23 capable of closing the insertion port 21, and an actuator 5 that rotates the lid member 23 to open and close the insertion port 21. Since the insertion port 21 is closed by the lid member 23, the insertion port 21 is more reliably protected.

The charging inlet 1 of the present embodiment includes the scraper 6 that removes foreign matter adhering to the cover 3. The scraper 6 can suppress accumulation of foreign matter and mud on the cover 3.

Note that the shape and the disposition of the opening 31 in the cover 3 are not limited to the shape and the disposition exemplified in the embodiment. The shape and the disposition of the drive mechanism 4 are not limited to the shape and the disposition exemplified in the embodiment. The shape and the disposition of the insertion port 21 are not limited to the shape and the disposition exemplified in the embodiment.

The charging inlet 1 may not have the lid member 23. For example, in a case where the cover 3 can sufficiently suppress entry of mud or foreign matter into the insertion port 21, the lid member 23 may be omitted. In the case where the charging inlet 1 includes the lid member 23, the lid member 23 and the cover 3 may be driven by one actuator. In this case, the lid member 23 and the cover 3 can be operated in conjunction with each other.

The content disclosed in the above embodiments can be implemented in combination as appropriate.

### Reference Signs List

1 CHARGING INLET
2 INLET BODY
3 COVER
4 DRIVE MECHANISM
5 ACTUATOR
20 FITTING PORTION
20d LOWER SURFACE
20u TOP SURFACE
21 INSERTION PORT
22 FIXING PORTION
23 LID MEMBER
31 OPENING
31a FIRST END
31b SECOND END
32 SHIELDING PORTION
40 ACTUATOR
41 FIRST PULLEY
42 SECOND PULLEY
43 THIRD PULLEY
50 CONTROL UNIT
300 VEHICLE CHARGING DEVICE
310 CONNECTOR
320 MOVING MECHANISM
L FIRST DIRECTION
W SECOND DIRECTION
Z UP-DOWN DIRECTION

## Claims

1. A charging inlet comprising:
an inlet body disposed in a vehicle and having an insertion port into which a connector for charging is inserted;
a flexible annular cover that covers the inlet body in such a manner as to surround the inlet body, the flexible annular cover having an opening through which the connector can pass;
a drive mechanism that rotates the cover to move a position of the opening; and
a control unit that controls the drive mechanism.

2. The charging inlet according to claim 1, wherein
the control unit moves the cover to an opening position and a shielding position by the drive mechanism,
the opening position is a position at which the opening faces the insertion port to allow insertion of the connector into the insertion port, and
the shielding position is a position at which the insertion port is covered by a shielding portion, the shielding portion being a portion of the cover not having the opening.

3. The charging inlet according to claim 1, further comprising:
a lid member capable of closing the insertion port; and
an actuator that rotates the lid member to open and close the insertion port.

4. The charging inlet according to claim 1, further comprising:
a scraper that removes foreign matter attached to the cover.
